# EUROPÄISCHE PATENTSCHRIFT

(11) **EP 3 083 193 B1**
(45) Veröffentlichungstag und Bekanntmachung des Hinweises auf die Patenterteilung: **16.10.2019**
(21) Anmeldenummer: 14811817.7
(22) Anmeldetag: 05.12.2014
(51) Int. Cl.: B29C 51/12

(54) **VERFAHREN ZUR HERSTELLUNG EINES BEHÄLTERS AUS THERMOPLASTISCHEM KUNSTSTOFF SOWIE NACH DEM VERFAHREN HERGESTELLTER KUNSTSTOFFBEHÄLTER**
METHOD FOR PRODUCING A CONTAINER FROM THERMOPLASTIC MATERIAL AND PLASTIC CONTAINER PRODUCED ACCORDING TO SAID METHOD
PROCÉDÉ DE FABRICATION D'UN RÉCIPIENT EN MATIÈRE SYNTHÉTIQUE THERMOPLASTIQUE ET RÉCIPIENT EN MATIÈRE SYNTHÉTIQUE FABRIQUÉ SELON LE PROCÉDÉ

(30) Priorität: 19.12.2013 DE 102013021684
(43) Veröffentlichungstag der Anmeldung: 26.10.2016
(73) Patentinhaber: Kautex Textron GmbH & Co. KG, 53229 Bonn (DE)
(72) Erfinder: BUCHHOLZ, Thomas, 51469 Bergisch Gladbach (DE)
(74) Vertreter: Richly & Ritschel Patentanwälte PartG mbB
(86) Internationale Anmeldenummer: PCT/EP2014/076702
(87) Internationale Veröffentlichungsnummer: WO 2015/096964

(56) Entgegenhaltungen:
- WO-A1-2007/000454
- WO-A1-2009/000362
- DE-A1-102007 024 677
- DE-A1-102011 108 026
- DE-B3-102008 027 823
- US-A1- 2004 200 846

## Beschreibung

Die Erfindung betrifft ein Verfahren zur Herstellung eines Behälters aus thermoplastischem Kunststoff, welches das Extrusionsblasformen des Behälters sowie das Herstellen einer Leitungsverbindung durch eine Behälterwand des Behälters umfasst.

Die Erfindung betrifft insbesondere ein Verfahren zur Herstellung eines Kraftstoffbehälters für Kraftfahrzeuge aus thermoplastischem Kunststoff sowie einen Kraftstoffbehälter, der nach dem Verfahren hergestellt wurde, wobei der Kraftstoffbehälter im Inneren des Behälters angeordnete Entlüftungseinrichtungen aufweist. Solche Entlüftungseinrichtungen umfassen üblicherweise Entlüftungsventile, die im sogenannten Ausdehnungsvolumen des Kraftstoffbehälters, das heißt in Einbaulage desselben nahe des Oberbodens, angeordnet sind. Diese Entlüftungsventile sind von innen an der Behälterwand befestigt und über eine Leitungsspinne miteinander verbunden. Die Entlüftungsleitung ist normalerweise an wenigstens einer Stelle des Behälters durch die Behälterwand hindurchgeführt und an einen außerhalb des Kraftstoffbehälters angeordnetes Kraftstoffdampffilter angeschlossen.

Wie vorstehend bereits erwähnt, werden Kraftfahrzeug-Kraftstoffbehälter oder auch andere großvolumige Behälter aus thermoplastischem Kunststoff größtenteils einstückig durch Extrusionsblasformen oder durch Verschweißen von aus thermoplastischem Kunststoff spritzgegossenen Halbschalen hergestellt. Üblicherweise umfassen die genannten Behälter Einbauteile wie beispielsweise Kraftstoffpumpen, Füllstandsgeber, Entlüftungsventile oder Ausperlbehälter oder dergleichen. Ein bekanntes Herstellungsverfahren zur Herstellung solcher Kunststoffbehälter mit Einbauteilen in einem Arbeitsgang umfasst die Herstellung und/oder Bereitstellung bahnförmiger Extrudate, die in einem mehrteiligen Formwerkzeug in einem ersten Schritt zu einem schalenförmigen Zwischenerzeugnis und in einem zweiten Schritt in dem selben Formwerkzeug zu einem einstückigen, geschlossenen Behälter umgeformt werden. Dabei wird zwischen zwei im Formnest definierenden Formwerkzeugen ein Zwischenrahmen angeordnet, innerhalb dessen beziehungsweise auf dem in die schalenförmigen Zwischenerzeugnisse zu fügenden Bauteile angeordnet werden. Die Bauteile werden dabei in das noch warmplastische bereits zu einer Schale umgeformte Zwischenerzeugnis eingebracht und mit diesem form- und/oder stoffschlüssig verbunden. Dabei werden üblicherweise auch Leitungsdurchführungen hergestellt.

Dabei ist bislang so verfahren worden, dass die Wand des schalenförmigen Zwischenerzeugnisses bei der Herstellung von innen, das heißt formnestseitig, mit einem Nippel oder Anschlussfitting durchstoßen wurde, wobei der Nippel beispielsweise mit einem umlaufenden Schweißkragen mit der inneren Wand des schalenförmigen Zwischenerzeugnisses, die die spätere Behälterinnenwand bildet, verschweißt wurde.

Ein solches Verfahren ist beispielsweise aus der DE 10 2007 024 667 A bekannt. Dieses Verfahren umfasst die Herstellung eines Behälters aus thermoplastischem Kunststoff durch Extrusionsblasformen, wobei der Behälter während dessen Ausformung innerhalb eines mehrteiligen Werkzeugs mit wenigstens einem dessen Wandung durchsetzenden Anschlusselement versehen wird, wobei die Wandung des Behälters im noch plastifizierten Zustand mit einem Teil des Anschlusselements durchstoßen wird, derart, dass das Anschlusselement wenigstens in Teilbereichen mit der Behälterwandung eine stoffschlüssige Verbindung eingeht, wobei das Anschlusselement mit einer Durchdringungsspitze versehen ist und das Anschlusselement bei der Durchdringung der Behälterwand in eine im Werkzeug vorgesehene Matritze eingeschoben wird, die auf der von dem Anschlusselement abgekehrten Seite der Behälterwandung angeordnet wird oder angeordnet ist. Das Anschlusselement wird bei diesem Verfahren formnestseitig durch die Behälterwandung beziehungsweise durch den Vorformling gestoßen. Dieses Anschlusselement dient dazu, innenseitig des fertigen Behälters angeordnete Einbauteile, insbesondere Entlüftungseinrichtungen oder dergleichen außenseitig mittels Schläuchen anschließen zu können. So wird dann nach dem Abnehmen der auf dem Anschlusselement angeordneten Durchdringungsspitze von außen ein Schlauch auf den so freigelegten Anschlussnippel aufgewürgt oder aufgeschossen.

Das Durchstoßen der Wandung des Vorformlings während der Herstellung des Behälters bietet den entscheidenden Vorzug, dass es nicht erforderlich ist, die Behälterwandung nach Fertigstellung des Behälters auszukreisen oder aufzubohren. Insbesondere Kraftstoffbehälter aus thermoplastischem Kunststoff werden aus mehrschichtigen Co-Extrudaten mit Barriereschichten für Kohlenwasserstoffe hergestellt. Die nachträgliche Verletzung der Barriereschichten durch Herstellung von Durchbrüchen in der Behälterwandung ist grundsätzlich nicht wünschenswert, da in diesen Bereichen die Sperrwirkung der für die Kohlenwasserstoffe diffusionshemmenden Barriereschichten beeinträchtigt wird.

Ein Nachteil des zuvor geschilderten Verfahrens besteht allerdings darin, dass die Durchdringungsspitze in Form einer Einweghülse vorgesehen sein muss, die nach Entnahme des Behälters aus dem Formwerkzeug entfernt werden muss. Das ist verhältnismäßig aufwendig, die Hülse ist allerdings erforderlich, um eine Beschädigung des im Inneren des Behälters an das Anschlusselement angeschlossene Ventilsystems zu vermeiden.

Ein weiterer Nachteil dieses Verfahrens ist darin zu sehen, dass für das Durchstoßen der Wandung des Zwischenerzeugnisses und das Verschweißen in einem einzigen Verfahrensschritt eine verhältnismäßig große Stanzeinrichtung vorgesehen sein muss, die darüber hinaus auch ein verhältnismäßig großen Hub bewerkstelligen muss. Bei der Verwendung bekannter Extrusionsblasformeinheiten ist der formnestseitig zur Verfügung stehende Bauraum für Einrichtungen zur Befestigung von Einbauteilen an der formnestseitigen Wandung des Zwischenerzeugnisses verhältnismäßig begrenzt. Darüber hinaus ist die Einhaltung eines verhältnismäßig engen Toleranzfensters im Hinblick auf die Anordnung der Stanzeinheit bezogen auf die im Werkzeug vorgesehene Matritze einzuhalten.

Schließlich erfordert die Durchdringung der Wandung des Zwischenerzeugnisses jedenfalls einen verhältnismäßig großen Hub für die Stanzeinheit. Insbesondere wenn an das Anschlusselement bereits eine Leitung einer Leitungsspinne mit Entlüftungsventilen angeschlossen ist, muss der Hub aus der Leitung selbst kompensiert werden, da eine solche Leitungsspinne an den verschiedenen Entlüftungspunkten des späteren Behälters mittels Entlüftungsventilen im selben Arbeitsgang verschweißt wird. Diese Problematik ist beispielsweise in der DE 10 2008 027 823 beschrieben.

Diese Druckschrift beschreibt ein Verfahren zur Herstellung eines Kraftstoffbehälters für Kfz aus thermoplastischem Kunststoff, das die Herstellung von bahnförmigen Vorformlingen, die Umformung der Vorformlinge in der ersten Hitze in einem mehrteiligen Werkzeug in einem ersten Schritt zu schalenförmigen Zwischenerzeugnissen und in einem zweiten Schritt in dem selben Werkzeug zu einem einstückig, geschlossenen Behälter umfasst, wobei zwischen dem ersten und dem zweiten Schritt wenigstens eine Betankungs- und/oder Betriebsentlüftungseinrichtung an wenigstens einer Innenwandung des Zwischenerzeugnisses befestigt wird, derart, dass wenigstens ein vormontierter Teil der Betankungs- und/oder Betriebsentlüftungseinrichtung mit wenigstens einem Anschlussfitting wenigstens einer Entlüftungsleitung und wenigstens einem Funktionsbauteil in einem Arbeitsgang stoffschlüssig mit der Innenwandung verbunden wird, wobei die Wandung des Zwischenerzeugnisses mit dem Anschlussfitting bei der Montage durchdrungen wird. Um den hierzu erforderlichen Hub realisieren zu können, wird in der DE 10 2008 027 823 die Verwendung wenigstens eines längenveränderbaren Leitungsabschnitts als Teil der Entlüftungsleitung vorgeschlagen, wobei der Betrag der Längenvereinbarkeit der Entlüftungsleitung so gewählt wird, dass diese etwa dem Weg entspricht, den der Anschlussfitting bei der Durchdringung der Wandung des Zwischenerzeugnisses vollzieht. Dies ist deshalb nachteilhaft, weil eigentlich eine entsprechend ausgebildete Entlüftungsleitung mit Überlänge nicht gewünscht ist, da die Leitung unter Umständen einen Siphon bilden kann, in dem sich flüssige Kohlenwasserstoffe sammeln. Auch ist das Durchhängen der Leitung in das Volumen des fertigen Behälters nicht wünschenswert, so dass die in der DE 10 2008 027 823 A beschriebene Lösung ebenfalls verhältnismäßig aufwendig ist.

Schließlich ist auch die Lage des oder der Anschlusspunkte am Außenumfang des fertigen Behälters unter Umständen ungünstig, da Anschlussnippel oder dergleichen naturgemäß einen Überstand über die Mantelkontur des Behälters bilden. Aus der WO2007/000454 A1 ist ein Verfahren zur Herstellung eines Behälters aus thermoplastischen Kunststoff bekannt, wobei das Verfahren das Extrudieren oder Bereitstellen eines schlauchförmigen Vorformlings aus plastinfiziertem thermoplastischen Kunststoff und Teilen sowie Ausbreiten des Vorformlings in zwei flächige Extrudatbahnen oder das Extrudieren oder Bereitstellen zweier bahnenförmiger Vorformlinge, das Anlegen und Formen der Vorform linge in Kavitäten eines mehrteiligen Blasformwerkzeugs unter Anwendung von Differenzdruck, wobei die Kavitäten des Blasformwerkzeugs ein Formnest begrenzten, und das Herstellen wenigstens einer Öffnung in wenigstens einem schalenförmigen Zwischenerzeugnis umfasst, wobei in einem Verfahrensschritt ein erstes Anschlusselement einer Leitungsverbindung oder einer Leitungsanordnung formnestseitig mit der Wand des schalenförmigen Zwischenerzeugnisses verschweißt wird, derart, dass ein umlaufender Schweißkragen des Anschlusselements die Öffnung dichtend umschließt.

Die Wand des Zwischenerzeugnisses wird mit einer Nadel durchstoßen, während der Vorformling innerhalb des Werkzeugs Druck beaufschlagt wird. In diesem Fall verursacht das Durchstoßen der Wand mit der Nadel einen nach außen hervorstehenden Materialvorsprung, der nach Fertigstellung des Behälters entfernt werden muss.

Der Erfindung liegt daher die Aufgabe zugrunde, ein Verfahren zur Herstellung eines Behälters aus thermoplastischem Kunststoff mit einer Leitungsdurchführung durch dessen Wandung bereitzustellen, welches die zuvor erwähnten Nachteile weitestgehend vermeidet.

Der Erfindung liegt weiterhin die Aufgabe zugrunde, einen entsprechenden Behälter bereitzustellen.

Die der Erfindung zugrundeliegende Aufgabe wird gelöst durch die Merkmale der Ansprüche 1 und 8. Vorteilhafte Ausgestaltungen der Erfindung ergeben sich aus den Unteransprüchen.

Die Erfindung kann dahingehend zusammengefasst werden, dass erfindungsgemäß das Öffnen der Behälterwand beziehungsweise das Öffnen der Wand des schalenförmigen Zwischenerzeugnisses und das Fügen des Anschlusselements in zwei separaten Verfahrensschritten durchgeführt wird, wobei das Anschlusselement formnestseitg an der Wand des Zwischenerzeugnisses befestigt wird, derart, dass das Anschlusselement die Behälterwand beziehungsweise die Wand des Zwischenerzeugnisses nicht durchdringt oder durchsetzt und folglich auch nicht nach außen hervorsteht.

Der Begriff "formnestseitig" im Sinne der vorliegenden Anmeldung bezeichnet diejenige Seite des Extrudats beziehungsweise der Behälterwand oder des schalenförmigen Zwischenerzeugnisses, welche der Innenseite des Formnestes zugewandt ist. Der Begriff "werkzeugseitig" im Sinne der vorliegenden Erfindung bezeichnet diejenige Seite des Vorformlings, des schalenförmigen Zwischenerzeugnisses oder der Behälterwand, die der formgebenden Seite des Blasformwerkzeugs zugewandt ist und die gegebenenfalls in Eingriff mit der formgebenden Wandung des Blasformwerkzeugs ist.

Unter einem Anliegen und Formen unter Anwendung von Differenzdruck im Sinne der vorliegenden Erfindung ist im Allgemeinen eine Evakuierung der betreffenden Kavitäten und/oder ein Ausformen der Vorformlinge mittels Gasdruck (Aufblasen) zu verstehen. Unter Anlegen und Formen der Vorformlinge unter Anwendung von Differenzdruck im Sinne der vorliegenden Anmeldung kann allerdings auch das Anlegen und Formen der Vorformlinge mittels eines oder mehrerer Stempel oder anderer Positivwerkzeuge zu verstehen sein.

Das Anschlusselement ist somit vollständig im Inneren des fertigen Behälters angeordnet, und zwar vorzugsweise so, dass die Steckverbindung der Leitungsdurchführung sich im Wesentlichen in die Behälterkontur beziehungsweise Hüllkurve des Behälters einfügt.

Ein so hergestellter Behälter ist so mit einem Anschlusselement versehen, dass dieses nicht über die Hüllkurve des Behälters, die durch die Behälterwand des Behälters definiert wird, hervorsteht. Das hat einerseits den Vorzug, dass beispielsweise auch ohne nennenswerten Bauraumverlust auch Winkelstücke oder Bögen als zweites Anschlusselement von außen vorgesehen werden können.

Andererseits ist der für das Fügen des ersten Anschlusselements erforderliche Hub minimal, es wird nur soviel Hub benötigt, wie durch das Aufschmelzen eines an dem ersten Anschlusselement vorzugsweise vorgesehenen Schweißkragens erzeugt wird.

Grundsätzlich kann vorgesehen sein, die Öffnung mittels eines Stanz- oder Schneidwerkzeugs formnestseitig herzustellen, das heißt so, dass formnestseitig eine Wand eines der schalenförmigen Zwischenerzeugnisse mit dem Stanz- oder Schneidwerkzeug durchdrungen wird. Alternativ ist es allerdings auch möglich, die Öffnung mittels eines Stanz- oder Schneidwerkzeugs werkzeugseitig herzustellen.

Wird die Wand des Zwischenerzeugnisses mit einem Stanzwerkzeug oder einem Werkzeug zum Auskreisen werkzeugseitig geöffnet, hat dies den Vorzug, dass keine Materialronde in den fertigen Behälter verloren wird.

Die zuvor beschriebenen Verfahrensschritte werden vorzugsweise in der Reihenfolge ihrer Aufzählung durchgeführt.

Das Verfahren in der zuvor beschriebenen Art und Weise kann auch das Fügen anderer Einbauteile an den noch warmplastischen schalenförmigen Zwischenerzeugnissen umfassen, wobei das Fügen dieser Einbauteile im Wesentlichen zeitgleich mit dem Fügen des ersten Anschlusselements erfolgen kann.

Die Erfindung ist so zu verstehen, dass wenigstens ein erstes Anschlusselement an wenigstens einem schalenförmigen Zwischenerzeugnis vorgesehen werden kann, grundsätzlich ist es aber auch möglich, mehrere erste Anschlusselemente an verschiedenen Stellen eines oder mehrerer schalenförmiger Zwischenerzeugnisse vorzusehen.

Das Verfahren wird vorzugsweise aber nicht notwendigerweise vollständig unter Ausnutzung der Extrusionswärme des plastifizierten thermoplastischen Kunststoffs durchgeführt, wobei im Wesentlichen vorzugsweise keine weitere Plastifizierungsenergie in die Extrudate eingebracht wird. Das Verfahren schließt allerdings nicht aus, dass Teile des verwendeten Extrusionsblasformwerkzeugs, beispielsweise die Kanten eines etwa benötigten Werkzeugteilers oder Abdichtrahmens oder die Kanten eines sogenannten Fügerahmens beheizt werden, um ein vorzeitiges Abkühlen der Vorformlinge zu verhindern.

Eine Steckverbindung im Sinne der vorliegenden Erfindung kann beispielsweise eine Steckverbindung umfassend ein Muffenende und ein Steckende sein, wobei das Muffenende und das Steckende vorzugsweise jeweils mit zueinander komplementären Rastmitteln versehen sind. Das Muffenende kann durch ein entsprechend geformtes Anschlusselement gebildet werden, die Steckverbindung kann allerdings einfachstenfalls nur einen Anschlussnippel und einen auf diesen aufgeschossenen oder aufgewürgten Schlauch oder Rohr umfassen. Eine solche Steckverbindung kann beispielsweise an dem Steckende eines oder mehrer Dichtelemente in Form von O-Ringen aufweisen.

Bei einer bevorzugten Variante des Verfahrens gemäß der Erfindung ist vorgesehen, dass das erste Anschlusselement ein Muffenende und das zweite Anschlusselement ein Steckende aufweist, wobei das Steckende von außen in das Muffenende eingesteckt wird.

Alternativ kann vorgesehen sein, dass das erste Anschlusselement ein topfförmiges, stirnseitig offenes Gehäuse mit wenigstens einem in diesem angeordneten, von der offenen Stirnseite aus zugänglichen Anschlusszapfen in Form eines Nippels oder Doppelnippels aufweist, wobei das Gehäuse mit der offenen Stirnseite formnestseitig mit der Wand des schalenförmigen Zwischenerzeugnisses die Öffnung umschließend verschweißt wird. Das topfförmige Gehäuse bildet dabei vorzugsweise an dem fertigen Behälter eine topfförmige Vertiefung. In diesem topfförmigen stirnseitig offenen Gehäuse kann wenigstens einen Anschlusszapfen vorgesehen sein, dieses kann allerdings auch mehrere Anschlusszapfen umfassen. Als Anschlusszapfen im Sinne der vorliegenden Anmeldung wird ein zapfenförmiges Steckende mit einem Steckprofil verstanden.

Bei einer vorteilhaften und zweckmäßigen Variante des Verfahrens gemäß der Erfindung ist vorgesehen, dass die Öffnung in einen Bereich der Wand des schalenförmigen Zwischenerzeugnisses eingebracht wird, der sich in einem Winkel von mehr als 0°, vorzugsweise etwa in einem rechten Winkel zu einer Ebene des schalenförmigen Zwischenerzeugnisses erstreckt, die die größte Erstreckung des schalenförmigen Zwischenerzeugnisses definiert, so dass die Steckverbindung parallel zu einem Oberboden oder einem Unterboden des fertigen Behälters hergestellt werden kann. Mit anderen Worten, die so hergestellte Leitungsdurchführung in der Wand des fertigen Behälters erstreckt sich etwa parallel zu einem Oberboden oder einem Unterboden des Behälters, so dass gewährleistet ist, dass der Behälter in der Einbaulage verhältnismäßig wenig Bauraum beansprucht.

Wenn als erstes Anschlusselement ein topfförmiges, stirnseitig offenes Gehäuse mit einem in diesem angeordneten von der offenen Stirnseite aus zugänglichen Anschlusszapfen Anwendung findet, ist es möglich, als zweites Anschlusselement ein Muffenende zu verwenden.

Erfindungsgemäß wird das Ausstanzen der Öffnung mit einem formnestseitigen Stanzwerkzeug durchgeführt, das durch die Wand des schalenförmigen Zwischenerzeugnisses in eine werkzeugseitige Matritze hineingestoßen wird.

Die Matritze kann beispielsweise zunächst beim Anlegen und Formen der schalenförmigen Zwischenerzeugnisse mittels eines werkzeugseitigen Kolbens verschlossen werden, wobei die Matritze von dem Kolben nach dem Anlegen und Formen zwecks Herstellung der Öffnung geöffnet wird. Auf diese Art und Weise kann sichergestellt werden, dass beim Vorblasen beziehungsweise Formen und Anlegen der schalenförmigen Zwischenerzeugnisse, sei es durch Unterdruck im Werkzeug und/oder Überdruck im Formnest, zunächst eine glattwandige Außenkontur des schalenförmigen Zwischenerzeugnisses hergestellt wird.

Das Verfahren gemäß der vorliegenden Erfindung wird vorzugsweise unter Verwendung eines Blasformwerkzeugs mit zwei jeweils wenigstens eine Kavität aufweisenden Formhälften, wenigstens einem Abdichtrahmen und/oder einem Fügerahmen durchgeführt, wobei der Fügerahmen quer zu einer Öffnungs- und Schließbewegung der Blasformhälften verfahrbar ist und zwischen die Blasformhälften verbringbar ist, wobei das Verfahren zunächst das Extrudieren oder Bereitstellen der Vorformlinge umfasst, die Vorformlinge währenddessen oder sodann zwischen den geöffneten Blasformhälften angeordnet werden, die Blasformhälften gegen den Abdichtrahmen geschlossen werden, die Vorformlinge anschließend unter Anwendung von Differenzdruck zu schalenförmigen Zwischenerzeugnissen geformt werden, danach die Öffnung gestanzt oder ausgekreist wird, dann die Blasformhälften geöffnet werden und wenigstens das erste Anschlusselement mit der Wand eines Zwischenerzeugnisses verschweißt wird und schließlich die Blasformhälften zwecks Fügen der schalenförmigen Zwischenerzeugnisse unmittelbar gegeneinander geschlossen werden.

Grundsätzlich ist es im Rahmen der vorliegenden Erfindung sinnvoll und möglich, die Öffnung mittels eines in dem Fügerahmen vorgesehenen Stanz- oder Schneidwerkzeuges herzustellen. In diesem Fall wird die Öffnung erst dann gestanzt oder ausgekreist, nachdem die Blasformhälften geöffnet wurden, der Fügerahmen zwischen die geöffneten Blasformhälften verbracht wurde und diese gegen den Fügerahmen wieder geschlossen wurden.

Bei dem Verfahren gemäß der Erfindung wird allerdings bevorzugt, wenigstens ein Stanz- oder Schneidwerkzeug in dem Abdichtrahmen unterzubringen, so dass die Öffnung unmittelbar nach dem Ausformen der Vorform linge zu schalenförmigen Zwischenerzeugnissen hergestellt werden kann.

Wie vorstehend bereits erwähnt, ist es grundsätzlich auch möglich und im Rahmen der vorliegenden Erfindung, die Öffnung unmittelbar nach der Ausformung der Vorformlinge zu schalenförmigen Zwischenerzeugnissen werkzeugseitig auszustanzen oder auszukreisen.

Unter Fügen in diesem Sinne ist das randseitige Verschweißen der schalenförmigen Zwischenerzeugnisse unter Anwendung von Fügedruck zu verstehen, wobei die schalenförmige Zwischenerzeugnisse dabei noch warmplastisch beziehungsweise heißplastisch sind.

Die Erfindung umfasst weiterhin einen Kraftstoffbehälter der sich durch wenigstens eine Leitungsdurchführung durch eine Behälterwand umfassend eine Steckverbindung auszeichnet, die innerhalb einer durch die Behälterwand definierten Mantelfläche oder Kontur des Behälters angeordnet ist. Der Kraftstoffbehälter wurde vorzugsweise nach dem zuvor beschriebenen Verfahren hergestellt.

Bei einer Variante des Kraftstoffbehälters gemäß der Erfindung ist vorgesehen, dass die Steckverbindung ein erstes Anschlusselement und ein zweites Anschlusselement umfasst, und dass das erste Anschlusselement mit dem Behälter verschweißt ist und dass das zweite Anschlusselement formschlüssig mit dem ersten Anschlusselement verbunden wird.

Vorzugsweise ist das erste Anschlusselement als Muffenende der Steckverbindung ausgebildet.

Alternativ kann das erste Anschlusselement ein topfförmiges, stirnseitig offenes Gehäuse aufweisen, in welchem ein einstückig angeformter Anschlusszapfen angeordnet ist, wobei das Gehäuse ein Volumen definiert, welches zu Lasten des Behältervolumens geht.

Die Erfindung wird nachstehend anhand eines in den Zeichnungen dargestellten Ausführungsbeispiels erläutert. Es zeigen:
- Figuren 1A bis 1C:: eine schematische Darstellung des Fertigungszyklus zur Herstellung des Behälters gemäß der Erfindung,
- Figuren 2a und 2b:: jeweils eine perspektivische Ansicht einer ersten Variante des Behälters gemäß der Erfindung,
- Figur 3:: eine perspektivische Ansicht des ersten Anschlusselements gemäß erstem Ausführungsbeispiel des Behälters nach der Erfindung,
- Figur 4:: eine vergrößerte Teilansicht des in Figur 2a dargestellten Behälters, teilweise im Schnitt, aus welcher die Lage des ersten Anschlusselements im Behälter ersichtlich ist,
- Figur 5:: eine perspektivische Ansicht einer formnestseitig angeordneten Stanzeinheit, die bei dem Verfahren gemäß der Erfindung Anwendung findet, unmittelbar vor dem Stanzen der Öffnung,
- Figur 6:: eine der Figur 5 entsprechende Ansicht beim Stanzen der Öffnung,
- Figur 7:: eine perspektivische Ansicht der Stanzeinrichtung nach dem Stanzen der Öffnung, wobei das Blasformwerkzeug der Einfachheit halber nicht dargestellt ist,
- Figur 8:: eine perspektivische Ansicht einer formnestseitig vorgesehenen Schweißeinrichtung zum Fügen und Schweißen des ersten Anschlusselements,
- Figur 9:: eine Seitenansicht der Schweißeinrichtung beim Schweißen des ersten Anschlusselements,
- Figur 10:: eine Innenansicht des Behälters mit dem fertig montierten Anschlusselement,
- Figur 11:: eine perspektivische Ansicht eines Behälters gemäß einer zweiten Variante der Erfindung,
- Figur 12:: eine perspektivische Ansicht eines ersten Anschlusselements gemäß einer zweiten Variante der Erfindung und
- Figur 13:: eine Schnittansicht durch das in Figur 12 dargestellte Anschlusselement.

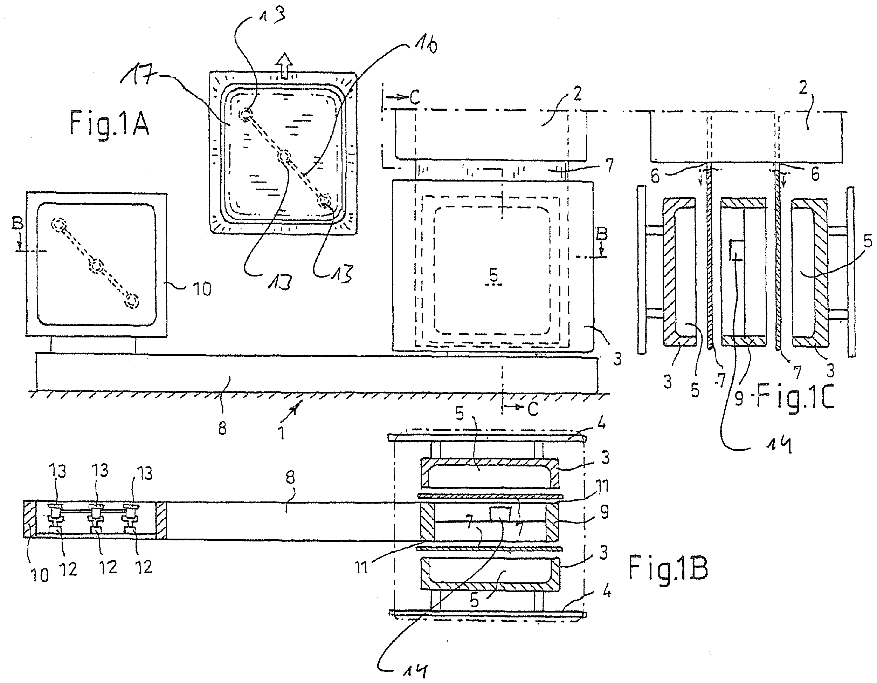

Es wird zunächst Bezug genommen auf die Figuren 1a bis 1c, die eine schematische Ansicht eines Blasformwerkzeugs 1 und eines Extrusionskopf 2 zur Durchführung des erfindungsgemäßen Verfahrens zeigen. Das Blasformwerkzeug umfasst zwei Blasformhälften 3, die an Formaufspannplatten befestigt sind und im Sinne einer Öffnungs- und Schließbewegung voneinander weg und aufeinander zu bewegbar sind. Obwohl vorstehend der Begriff Blasformhälften verwendet wurde, ist es im Rahmen der Erfindung, wenn die einzelnen, jeweils eine Kavität 5 aufweisenden Blasformhälften 3 mehrteilig ausgebildet sind. Jede der Blasformhälften 3 muss nicht notwendigerweise die Hälfte des Blasformwerkzeugs bilden. Auch müssen die Teilungsebenen der Blasformhälften nicht notwendigerweise die geometrisch hälftige Teilung des Blasformwerkzeugs bilden.

Die Formaufspannplatten 4 sind bei dem dargestellten Ausführungsbeispiel Teil eines nicht näher gezeigten Maschinengrundgestells.

Der Extrusionskopf 2 ist in den Zeichnungen stark vereinfacht dargestellt, dieser umfasst zwei Breitschlitzdüsen, aus denen jeweils lappenförmige beziehungsweise bahnförmige, sich in die Zeichnungsebene hinein gradlinig erstreckende Vorformlinge 7 hängend, das heißt in Schwerkraftrichtung kontinuierlich extrudiert werden. Die Vorform linge 7 bestehen vorzugsweise jeweils aus einem insgesamt sechsschichtigen Extrudat umfassend eine rußeingefärbte HDPE-Schicht, eine Rezyklat- (regrind) Schicht auf HDPE Basis, eine beidseitig von Haftvermittler umgebene EVOH-Barriereschicht sowie eine weitere nicht eingefärbte HDPE-Schicht. Die Haftvermittlerschichten können beispielsweise auf LDPE Basis ausgebildet sein.

Das Blasformwerkzeug 1 gemäß der Erfindung umfasst neben dem nicht dargestellten Maschinengrundgestell ein Maschinengestell 8, welches bezüglich des Maschinengrundgestells und quer zur Öffnungs- und Schließbewegung der Formaufspannplatten 4 verfahrbar ist. Auf den Maschinengestell 8 sind mit Abstand zueinander ein Abdichtrahmen 9 sowie ein Fügerahmen 10 angeordnet. Der Abdichtrahmen ist mit umlaufenden Dichtflächen 11 versehen, die eine umlaufende Kontur definieren, die etwa der Begrenzung der Kavitäten 5 der Blasformhälften 3 folgt.

Der Fügerahmen 10 ist ebenfalls als Mittenrahmen ausgebildet, innerhalb dessen einzelne Bauteilaufnahmen 12 in Form von pneumatischen Kolben-Zylinder Anordnungen mit Befestigungsmitteln angeordnet sind.

Grundsätzlich können die Bautiefe des Abdichtrahmens 9 und des Fügerahmens 10 etwa gleich gestaltet sein. Der Abdichtrahmen 9 kann im einfachsten Fall als einfache Platte, gegebenenfalls mit Mitteln zur Gasdruckbeaufschlagung der Kavitäten 5 ausgebildet sein. Bei der in dem vorliegenden Ausführungsbeispiel dargestellten Variante des

Blasformwerkzeugs 1 nimmt der Abdichtrahmen 9 eine Stanzeinheit 14 auf. Eine solche Stanzeinheit kann zusätzlich oder alternativ auch in dem Fügerahmen 10 angeordnet sein.

Bei dem dargestellten Ausführungsbeispiel ist das Maschinengestell 8 mit den darauf angeordneten Abdichtrahmen 9 und Fügerahmen 10 relativ zum Extrusionskopf 2 verfahrbar. Alternativ kann vorgesehen sein, den Abdichtrahmen 9 und den Fügerahmen 10 relativ zueinander auf dem Maschinengestell 8 verfahrbar anzuordnen. Ebenfalls ist im Rahmen der Erfindung möglich, das Maschinengestell 8 bezüglich des Extrusionskopfs 2 sowie den Fügerahmen 10 und den Abdichtrahmen 9 relativ zueinander auf den Maschinengestell verfahrbar anzuordnen. Schließlich kann vorgesehen sein, das Maschinengestell 8 ortsfest relativ zu dem Extrusionskopf 2 anzuordnen und die Blasformhälften 3 relativ zu den ortsfest auf dem Maschinengestell 8 angeordneten Abdicht- und Fügerahmen zu bewegen.

Die Figuren 1A und 1B zeigen das Blasformwerkzeug 1 zum Ende und zum Beginn eines jeden Arbeitszyklus. Ein solcher Arbeitszyklus umfasst zunächst die Extrusionen der Vorformlinge kontinuierlich auf eine Länge, die etwa der Höhe der Blasformhälften 3 entspricht, wie dies in Figur 1c dargestellt ist. Die Vorformlinge 7 werden zwischen die geöffneten Blasformhälften extrudiert, und zwar jeweils zwischen einer Blasformhälfte 3 und dem zwischen den Blasformhälften 3 angeordneten Abdichtrahmen 9. In einem weiteren nicht dargestellten Verfahrensschritt schließen sich die Blasformhälften gegen den zwischen diesen angeordneten Abdichtrahmen 9, sodann werden die Vorformlinge 7 am Extrusionskopf 2 abgetrennt, und zwar unter Zuhilfenahme weiterer Werkzeuge zum Trennen des kontinuierlich extrudierten Vorformlings. Diese Werkzeuge sind aus Vereinfachungsgründen nicht dargestellt. Sodann werden die Vorformlinge 7 unter Anwendung von Vakuum und/oder Überdruck in die Kavitäten 5 der Blasformhälften 3 angelegt und ausgeformt.

In einem weiteren Verfahrensschritt wird mittels der in dem Abdichtrahmen 9 angeordneten Stanzeinheit 14 eine Öffnung 18 in dem zu einem schalenförmigen Zwischenerzeugnis ausgeformten Vorformling 7 ausgestanzt. Dabei wird mittels der Stanzeinheit 14 über eine Stanzhülse 19 durch den in der betreffenden Kavität 5 zu einem schalenförmigen Zwischenerzeugnis ausgeformten Vorformling 7 die Öffnung 18 ausgestanzt, wobei eine Stanzhülse 19 in eine entsprechend ausgeformte Matritze 20 innerhalb der Kavität 5 des Blasformwerkzeugs 1 eingeschoben wird. In der Matritze 20 ist ein vorzugsweise pneumatisch druckvorbeaufschlagter Kolben 21 angeordnet, der die Matritze 20 verschließt und der durch die Stanzhülse 19 verlagert wird. Der Kolben 21 dient dazu, während des Ausformens der Vorformlinge 7 zu schalenförmigen Zwischenerzeugnissen während die Blasformhälften gegen den Abdichtrahmen 9 geschlossenen sind, die Matritze 20 verschlossen zu halten, um so zu gewährleisten, dass die werkzeugseitige Oberfläche des schalenförmigen Zwischenerzeugnisses nicht in die Matritze 20 deformiert wird.

Die Blasformhälften 3 werden geöffnet, sodann wird der Fügerahmen 10 zwischen die geöffneten Blasformhälften 3 verbracht. Dies kann entweder dadurch erfolgen, dass das nicht gezeigte Maschinengrundgestell relativ zu dem ortsfest angeordneten Extrusionskopfs 2 verfahren wird oder dadurch, dass das Maschinengestell 8 relativ zu dem ortsfest unter dem Extrusionskopfs 2 angeordneten Blasformwerkzeug 1 verfahren wird.

In dem Fügerahmen 10 sind Bauteilaufnahmen 12 mit Einbauteilen 13 vorgesehen, welche im Inneren des zu fertigenden Behälters angeordnet werden sollen.

In diesem Verfahrensschritt sind in den offenen Kavitäten 5 des Blasformwerkzeugs die schalenförmige Zwischenerzeugnisse bereits ausgeformt, die sich noch im heißplastischem beziehungsweise warmplastischem Zustand befinden.

In dem folgenden Verfahrensschritt werden die Einbauteile 13 unter Ausnutzung der noch vorhandenen Plastifizierungswärme an die noch warmplastischen schalenförmigen Zwischenerzeugnisse gefügt, wobei das Fügen stoffschlüssig und/oder formschlüssig erfolgen kann. Stoffschlüssiges Fügen in diesem Sinne beinhaltet das Verschweißen der Einbauteile 13 mit der formnestseitigen Wand des betreffenden schalenförmigen Zwischenerzeugnisses.

Unter einem Formnest im Sinne der vorliegenden Anmeldung wird der von den Kavitäten 5 der Blasformhälften 3 umschlossene Raum verstanden. Formnestseitig im Sinne der vorliegenden Anmeldung bezeichnet diejenige Seite des Vorformlings beziehungsweise des schalenförmigen Zwischenerzeugnisses, welches der betreffenden Kavität abgekehrt ist.

Zwecks Fügen der Einbauteile im Sinne eines Verschweißens dieser mit der noch warmplastischen oder heißplastischen Wand des schalenförmigen Zwischenerzeugnisses umfasst der Fügerahmen 10 wenigstens eine Schweißeinheit 15. Die Schweißeinheit 15 kann Infrarot-Heizstrahler oder Schweißspiegel oder anders geartete Heizplatten aufweisen. Das zu fügende Einbauteil 13 wird an der hierfür vorgesehenen Schweißfläche erweicht beziehungsweise erhitzt, beispielsweise mittels IR-Strahler oder Schweißspiegel und sodann beispielsweise aktiv mittels der Bauteilaufnahmen 12 gegen das schalenförmige Zwischenerzeugnis gepresst.

Vorstehend erwähnt war die Möglichkeit, die Bauteilaufnahmen 12 in Form von pneumatischen Kolben-Zylinderanordnungen vorzusehen, in diesem Falle werden die Einbauteile 13 aktiv gefügt in dem Sinne, dass diese mit dem Bauteilaufnahmen 12 in Richtung auf das schalenförmige Zwischenerzeugnis bewegt werden.

Alternativ ist es möglich und sinnvoll, die Bauteilaufnahmen 12 als einfach Steckaufnahmen zu gestalten, die die betreffenden Einbauteile 13 lediglich halten und festlegen, der eigentliche Fügevorgang wird dann durch das Schließen der Blasformhälften 3 gegen den Fügerahmen 10 bewerkstelligt (statisches Fügen).

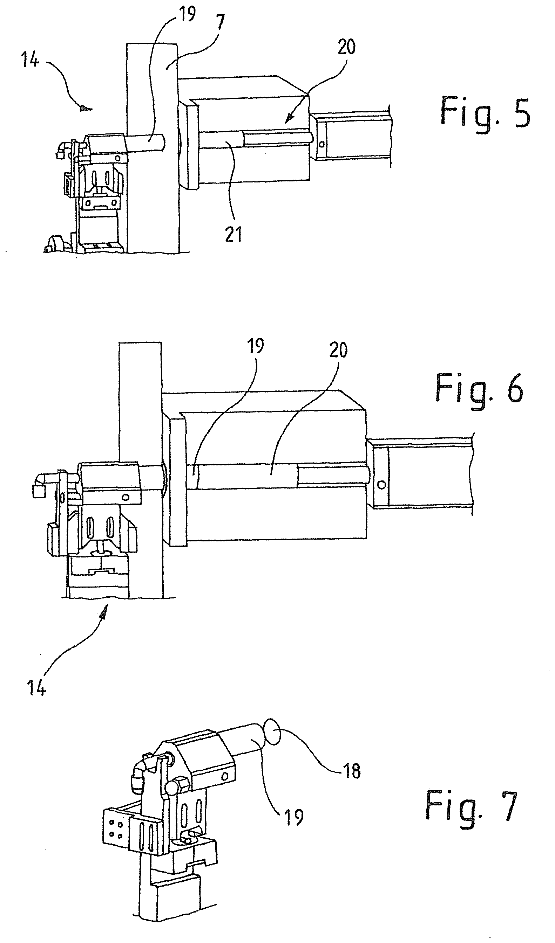

Das der Anmeldung zugrunde liegende Ausführungsbeispiel wird unter Bezugname auf einen Kraftstoffbehälter für Kraftfahrzeuge beschrieben, in den beispielsweise als Einbauteile Entlüftungsventile verbracht werden. Die Entlüftungsventile sind über eine Entlüftungsleitung 16 miteinander verbunden, diese Anordnung wird im Allgemeinen auch als sogenannte Leitungsspinne bezeichnet. Um die Entlüftungsleitung 16 außenseitig des herzustellenden Kraftstoffbehälters 17 anschließen zu können, muss in der Wand des Kraftstoffbehälters 17 als zu fertigender Artikel/Behälter eine Leitungsdurchführung oder Öffnung 18 vorgesehen sein. Diese Öffnung 18 wird, wie vorstehend erwähnt, unmittelbar nach dem Ausformen der Vorformlinge 7 zu schalenförmigen Zwischenerzeugnissen hergestellt, und zwar mittels der in dem Abdichtrahmen 9 angeordneten Stanzeinheit 14. Die Stanzeinheit 14 ist in den Figuren 5 bis 7 dargestellt.

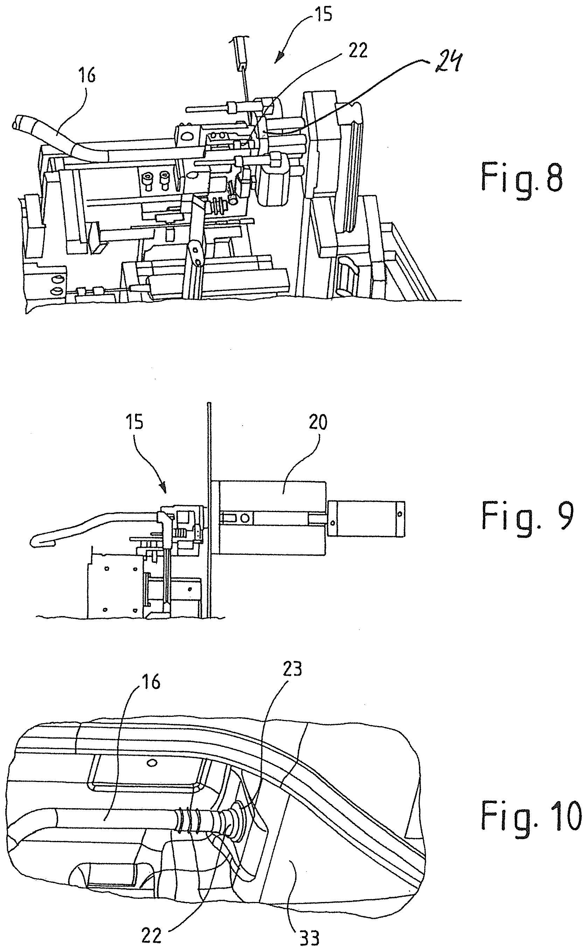

Nach dem Schließen des Blasformwerkzeugs beziehungsweise der Blasformhälften gegen den Fügerahmen 10 erfolgt sodann das Verschweißen eines Anschlussendes der Entlüftungsleitung 16 an dem schalenförmigen Zwischenerzeugnis mittels der in Figur 8 dargestellten Schweißeinheit 15 im Bereich der Öffnung 18, so dass das Anschlussende der Entlüftungsleitung mit der Öffnung 18 kommuniziert.

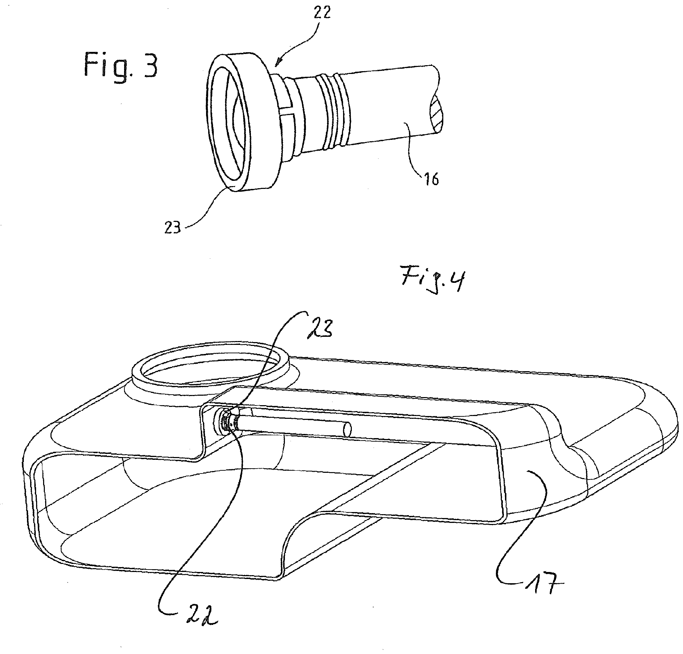

Zeitgleich erfolgt das Verschweißen der übrigen Einbauteile, beispielsweise in Form der Entlüftungsventile, die über die Entlüftungsleitung 16 verbunden sind. Zwecks Anschluss an den Vorformling 7 im Bereich der Öffnung 18 ist die Entlüftungsleitung 16 mit einem ersten Anschlusselement in Form einer Schweißmuffe 22 verbunden. Die Schweißmuffe 22 an der Entlüftungsleitung 16 ist in den Figuren 3 und 10 dargestellt.

Wie dies insbesondere Figur 8 zu entnehmen ist, ist die Entlüftungsleitung mit ihrem offenen Ende und der Schweißmuffe 22 in die Schweißeinheit eingelegt und wird dort mit einem Schweißkragen 23 zunächst an ein Heizelement 24 angelegt. Ist der Schweißkragen, der beispielsweise ein mit dem Vorformling 7 im Sinne einer Verschweißbarkeit kompatibles Material aufweist, hinreichend erweicht, wird die Schweißmuffe 22 gegen den Vorformling 7 beziehungsweise das in diesem Verfahrensstadium bereits vorausgeformte schalenförmige Zwischenerzeugnis verpresst, so dass die Schweißmuffe 22 randseitig der Öffnung 18 mit dem Vorformling 7 verschweißt wird.

Obwohl vorstehend zunächst das Stanzen der Öffnung 18 und dann das Schweißen beschrieben wurde, ist es im Rahmen der Erfindung sinnvoll und möglich, das Einlegen der Entlüftungsleitung 16 in eine Artikelaufnahme der Schweißeinheit und das Erweichen des Schweißkragens 23 außerhalb des Blasformwerkzeugs unmittelbar vor dem Verbringen des Fügerahmens 10 zwischen die Blasformhälften 3 durchzuführen.

Die Figur 9 veranschaulicht den Vorgang des Fügens und Verschweißens der Schweißmuffe 22 an die Wand des Kraftstoffbehälters 17 innerhalb des Blasformwerkzeuges 1, wobei die Schweißmuffe 22 an der Entlüftungsleitung 16 bereits vormontiert ist.

Die Figur 10 veranschaulicht den fertigen Anschluss der Schweißmuffe 22 an die Wand des Kraftstoffbehälters 17.

Nach dem Fügen der Einbauteile 13 und insbesondere dem Anschließen der Entlüftungsleitung 16 an die Öffnung 18 werden die Blasformhälften 3 geöffnet, der Fügerahmen 10 wird aus dem Schließweg der Blasformhälften 3 herausgefahren, letztere werden gegeneinander geschlossen, wobei die schalenförmige Zwischenerzeugnisse zu dem im Wesentlichen fertigen Kraftstoffbehälter 13 gefügt werden. Das Fügen erfolgt in bekannter Art und Weise durch randseitiges Verschweißen der schalenförmigen Zwischenerzeugnisse beziehungsweise der Vorformlinge 7.

Sodann werden die Blasformhälften 3 wieder geöffnet, der Artikel in Form eines fertigen Kraftstoffbehälters 17 wird entnommen.

Nach dem dieser ggf. getrimmt wurde, wird durch die nach außen freiliegende Öffnung 18 ein zweites Anschlusselement 25 eines außenliegenden Leitungsabschnitts 26 eingesteckt.

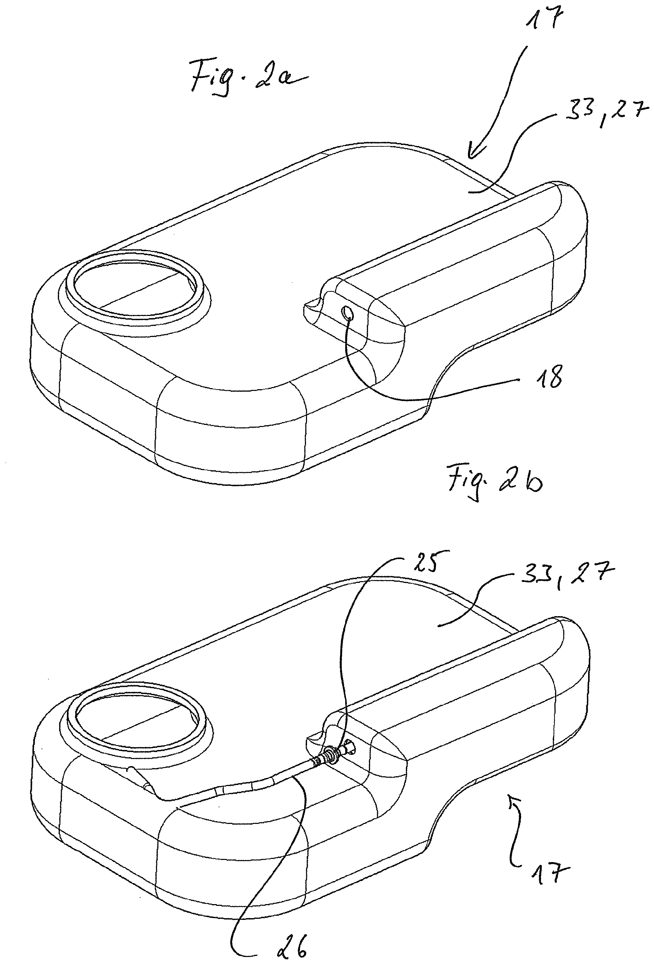

Wie aus den Figuren 2a und 2b ersichtlich ist, die den Kraftstoffbehälter 17 in perspektivischer Außenansicht zeigen, ist die Öffnung 18 am fertigen Kraftstoffbehälter 17 so angeordnet, dass sie sich etwa senkrecht zu einem Oberboden 27 des Kraftstoffbehälters 17 erstreckt, sodass der außenliegende Leitungsabschnitt 26 ohne Leitungsbogen und im Wesentlichen ohne Winkelstück parallel zum Oberboden 27 verlegt werden kann.

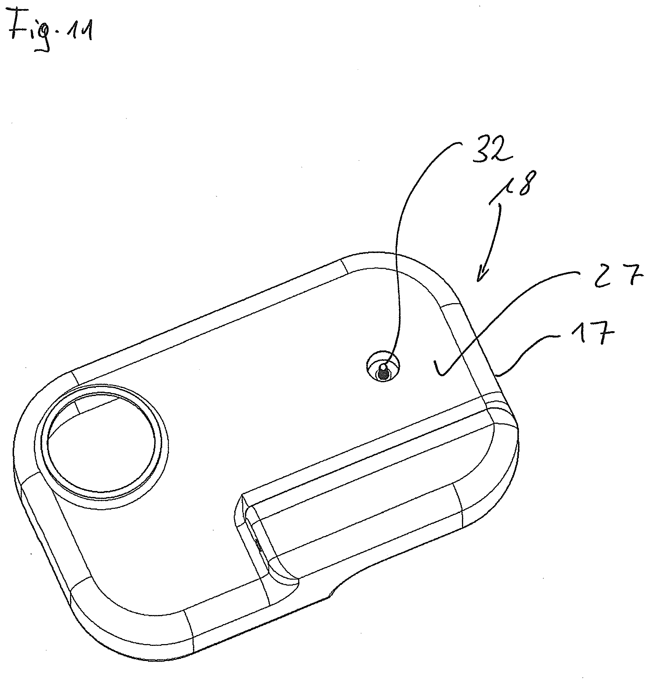

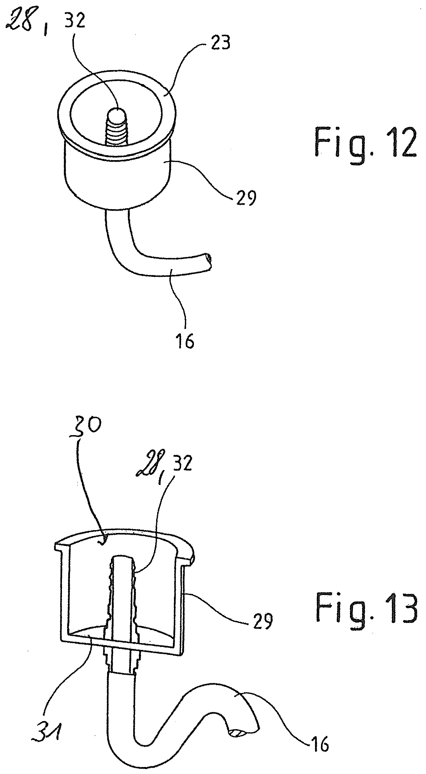

Die Steckverbindung ist aufgrund der zuvor beschriebenen Konfiguration innerhalb des Volumens des Kraftstoffbehälters 17 herstellbar. Eine alternative Ausgestaltung des Kraftstoffbehälters 17 sowie des zweiten Anschlusselements ist in den Figuren 11 bis 13 dargestellt. Die Figur 12 zeigt das erste Anschlusselement als Steckverbinder 28 beziehungsweise als Steckende. Dieser Steckverbinder 28 umfasst ein becherförmiges oder napf- oder topfförmiges Gehäuse 29, das eine stirnseitige Öffnung 30 und ein Boden 31 aufweist. An das Gehäuse 29 ist ein dieses durchsetzender Anschlusszapfen 32 in Form eines Doppelnippels einstückig angeformt. Der Anschlusszapfen 32 umfasst ein von dem Gehäuse 29 umschlossenes Steckende sowie ein in der Einbaulage behälterinnenseitiges Steckende, auf welches die Entlüftungsleitung 16 behälterinnenseitig aufgesteckt ist. Schließlich ist die Öffnung 30 des Gehäuses 29 von einem Schweißkragen 23 eingefasst, der in der vorstehend beschriebenen Art und Weise während der Herstellung des Kraftstoffbehälters 17 die Öffnung 18 umrandend oder einfassend mit dem Vorformling 7 beziehungsweise mit dem schalenförmigen Zwischenerzeugnis verschweißt wird, wobei sich das Gehäuse 29 vollständig behälterinnenseitig befindet, so dass das freie Steckende des Anschlusszapfens 32, wie in Figur 11 ersichtlich, vertieft innerhalb der Behälterkontur angeordnet ist, so dass auch bei dieser Variante des Kraftstoffbehälters 17 ein zweites Anschlusselement von außen so mit dem Anschlusszapfen 32 verbindbar ist, dass sich die Steckverbindung innerhalb der durch die Behälterwand 33 definierten Kontur des Kraftstoffbehälters 17 erstreckt. In diesem Fall kann der außenliegende Leitungsabschnitt 26 entweder mit einem Muffenende oder auch unmittelbar auf den Anschlusszapfen 32 aufgesteckt werden, wobei die Anschlussrichtung etwa normal zur Erstreckung des Oberbodens 27 ist.

Bei dem in Figur 11 gezeigten Ausführungsbeispiel erstreckt sich der Schweißkragen 23 des Gehäuses 29 in etwa parallel zum Oberboden 27 des Kraftstoffbehälters 17, die Erfindung ist allerdings so zu verstehen, dass auch eine Montage in einem Winkel zur Erstreckungsrichtung des Oberbodens 27 möglich ist, beispielsweise senkrecht dazu, so dass so der außenliegende Leitungsabschnitt 26 etwa parallel zur Erstreckungsrichtung des Oberbodens 27 des Kraftstoffbehälters 17 eingesteckt beziehungsweise verbunden werden kann.

Unter einer Steckverbindung im Sinne der vorliegenden Erfindung ist auch eine solche Steckverbindung zu verstehen, die rastend hergestellt wird oder herstellbar ist.

### Bezugszeichenliste:

- 1: Blasformwerkzeug
- 2: Extrusionskopf
- 3: Blasformhälften
- 4: Formaufspannplatte
- 5: Kavitäten
- 6: Breitschlitzdüsen
- 7: Vorform linge
- 8: Maschinengestell
- 9: Abdichtrahmen
- 10: Fügerahmen
- 11: Dichtflächen
- 12: Bauteilaufnahmen
- 13: Einbauteile
- 14: Stanzeinheit
- 15: Schweißeinheit
- 16: Entlüftungsleitung
- 17: Kraftstoffbehälter
- 18: Öffnung
- 19: Stanzhülse
- 20: Matritze
- 21: Kolben
- 22: Schweißmuffe
- 23: Schweißkragen
- 24: Heizelement
- 25: zweites Anschlusselement
- 26: außenliegender Leitungsabschnitt
- 27: Oberboden
- 28: Steckverbinder
- 29: Gehäuse
- 30: Öffnung
- 31: Boden
- 32: Anschlusszapfen
- 33: Behälterwand

## Patentansprüche

1. Verfahren zur Herstellung eines Behälters aus thermoplastischem Kunststoff folgende Verfahrensschritte umfassend:
- Extrudieren oder Bereitstellen eines schlauchförmigen Vorformlings (7) aus plastifiziertem thermoplastischem Kunststoff und Teilen sowie Ausbreiten des Vorformlings (7) in zwei flächige Extrudatbahnen oder
- Extrudieren oder Bereitstellen zweier bahnförmiger Vorformlinge (7),
- Anlegen und Formen der Vorform linge (7) in Kavitäten (5) eines mehrteiligen Blasformwerkzeugs (1) unter Anwendung von Differenzdruck, wobei die Kavitäten (5) des Blasformwerkzeugs (1) ein Formnest begrenzen,
- Ausstanzen oder Auskreisen wenigstens einer Öffnung (18) in wenigstens einem schalenförmigen Zwischenerzeugnis, wobei
- die Öffnung mittels eines Stanz- oder Schneidwerkzeugs hergestellt wird, das eine Wand eines der schalenförmigen Zwischenerzeugnisse durchdringt, wobei in einem zweiten Verfahrensschritt ein erstes Anschlusselement einer Leitungsverbindung oder einer Leitungsanordnung formnestseitig mit der Wand des schalenförmigen Zwischenerzeugnisses verschweißt wird, derart, dass ein umlaufender Schweißkragen (23) des ersten Anschlusselements die Öffnung (18) dichtend umschließt, und wobei das Anschlusselement die Wand des Zwischenerzeugnisses nicht durchdringt oder durchsetzt und auch nicht nach Außen hervorsteht,
- Fügen der schalenförmigen Zwischenerzeugnisse zu einem Behälter und Entnehmen des Behälters aus dem Blasformwerkzeug (1) sowie
- Verbinden eines zweiten Anschlusselements (25), das mit dem ersten Anschlusselement im Sinne einer Steckverbindung komplementär ist, mit dem ersten Anschlusselement, wobei
die Steckverbindung innerhalb der durch die Behälterwand definierten Kontur des Behälters hergestellt wird,
**dadurch gekennzeichnet, dass**
das Ausstanzen der Öffnung (18) mit einem formnestseitigen Stanzwerkzeug durchgeführt wird, das durch die Wand des schalenförmigen Zwischenerzeugnisses in eine werkzeugseitige Matritze (20) hineingestoßen wird.

2. Verfahren nach Anspruch 1, **dadurch gekennzeichnet, dass** das erste Anschlusselement ein Muffenende und dass das zweite Anschlusselement ein Steckende aufweist, wobei das Steckende von außen in das Muffenende eingesteckt wird.

3. Verfahren nach Anspruch 1, **dadurch gekennzeichnet, dass** das erste Anschlusselement ein topfförmiges, stirnseitig offenes Gehäuse (29) mit wenigstens einem in diesem angeordneten von der offenen Stirnseite aus zugänglichen Anschlusszapfen (32) aufweist, wobei das Gehäuse mit der offenen Stirnseite formnestseitig mit der Wand des schalenförmigen Zwischenerzeugnisses die Öffnung (18) umschließend verschweißt wird.

4. Verfahren nach einem der Ansprüche 1 bis 3, **dadurch gekennzeichnet, dass** die Öffnung (18) in einen Bereich der Wand des Zwischenerzeugnisses eingebracht wird, der sich in einem Winkel größer 0°, vorzugsweise etwa in einem rechten Winkel zu einer Ebene des schalenförmigen Zwischenerzeugnisses erstreckt, die die größte Erstreckung des schalenförmigen Zwischenerzeugnisses definiert, so dass die Steckverbindung parallel zu einem Oberboden (27) oder Unterboden des fertigen Behälters hergestellt werden kann.

5. Verfahren nach Anspruch 1, **dadurch gekennzeichnet, dass** die Matritze (20) zunächst beim Anlegen und Formen der schalenförmigen Zwischenerzeugnisse mittels eines werkzeugseitigen Kolbens (21) verschlossen wird und dass die Matritze (20) von dem Kolben (21) nach dem Anlegen und Formen zwecks Herstellen der Öffnung geöffnet wird.

6. Verfahren nach einem der Ansprüche 1 bis 5, **gekennzeichnet durch** die Verwendung eines Blasformwerkzeugs (1) mit zwei jeweils wenigstens eine Kavität (5) aufweisenden Blasformhälften (3), wenigstens einem Abdichtrahmen (9) und/oder einem Fügerahmen (10), der quer zu einer Öffnungs- und Schließbewegung der Blasformhälften (3) verfahrbar ist und zwischen die Blasformhälften (3) verbringbar ist, wobei das Verfahren zunächst das Extrudieren oder Bereitstellen der Vorformlinge (7) umfasst, die Vorformlinge (7) währenddessen oder sodann zwischen den geöffneten Blasformhälften (3) angeordnet werden, die Blasformhälften (3) gegen den Abdichtrahmen (9) geschlossen werden, die Vorformlinge (7) anschließend unter Anwendung von Differenzdruck zu schalenförmigen Zwischenerzeugnissen geformt werden, danach die Öffnung (18) gestanzt oder ausgekreist wird, dann die Blasformhälften (3) geöffnet werden und wenigstens ein erstes Anschlusselement mit der Wand eines Zwischenerzeugnisses verschweißt wird und schließlich die Blasformhälften (3) zwecks Fügen der schalenförmigen Zwischenerzeugnisse unmittelbar gegeneinander geschlossen werden.

7. Verfahren nach Anspruch 6, **dadurch gekennzeichnet, dass** die Öffnung (18) mittels des in dem Abdichtrahmen (9) angeordneten Stanz- oder Schneidwerkzeugs hergestellt wird.

8. Kraftstoffbehälter hergestellt nach dem Verfahren gemäß einem der Ansprüche 1 bis 7, **gekennzeichnet durch** wenigstens eine Leitungsdurchführung durch eine Behälterwand (33) umfassend eine Steckverbindung, die innerhalb einer durch die Behälterwand (33) definierten Mantelfäche oder Kontur des Behälters angeordnet ist, wobei die Steckverbindung ein erstes Anschlusselement und ein zweites Anschlusselement (25) umfasst und das erste Anschlusselement mit dem Behälter verschweißt ist und das zweite Anschlusselement (25) mit dem ersten Anschlusselement verbunden ist und wobei das erste Anschlusselement vollständig im Inneren des Behälters angeordnet ist, und zwar so, dass die Steckverbindung der Leitungsdurchführung sich im Wesentlichen in die Behälterkontur bzw. Hüllkurve des Behälters einfügt.

9. Kraftstoffbehälter nach Anspruch 7 oder 8, **dadurch gekennzeichnet, dass** das erste Anschlusselement als Muffenende der Steckverbindung ausgebildet ist.

10. Kraftstoffbehälter nach einem der Ansprüche 8 oder 9, **dadurch gekennzeichnet, dass** das erste Anschlusselement ein topfförmiges, stirnseitig offenes Gehäuse (29) aufweist, in welchem ein einstückig angeformter Anschlusszapfen (32), vorzugsweise in Form eines Doppelnippels, angeordnet ist.

## Claims

1. A method for producing a tank from thermoplastic material, comprising the following method steps:
- extruding or providing a hose-like parison (7) composed of plasticized thermoplastic material, and dividing and spreading the parison (7) into two areal extrudate webs, or
- extruding or providing two parisons (7) in web form,
- laying-in and molding the parisons (7) in recesses (5) of a multi-part blow-molding tool (1) using differential pressure, wherein the recesses (5) of the blow-molding tool (1) delimit a mold cavity,
- punching out, or cutting out in a circular shape, at least one opening (18) in at least one shell-like intermediate product, wherein the opening is produced by way of a punching or cutting tool which penetrates through a wall of one of the shell-like intermediate products, wherein
in a second method step, a first attachment element of a line connection or of a line arrangement is welded, at the mold cavity side to the wall of the shell-like intermediate product in such a way that an encircling weld collar (23) of the first attachment element sealingly surrounds the opening (18), wherein the attachment element does not pierce or extend through the wall of the intermediate product and also does not protrude outward,
- joining the shell-like intermediate products to form a tank, and removing the tank from the blow-molding tool (1), and
- connecting a second attachment element (25), which is complementary to the first attachment element in the context of a plug-type connection, to the first attachment element, wherein
the plug-type connection is produced within the contour of the tank as defined by the tank wall,
**characterized in that**
the punching out of the opening (18) is carried out with a mold cavity side punching tool which is pushed through the wall of the shell-like intermediate product into a tool side die (20).

2. The method as claimed in claim 1, **characterized in that** the first attachment element has a socket end and the second attachment element has a plug end, wherein the plug end is inserted from the outside into the socket end.

3. The method as claimed in claim 1, **characterized in that** the first attachment element has a pot-shaped housing (29) which is open at an end side and which has at least one attachment pin (32) which is arranged in said housing and which is accessible from the open end side, wherein the housing is, by way of the open end side, welded at the mold cavity side to the wall of the shell-like intermediate product, in a manner encircling the opening (18).

4. The method as claimed in one of claims 1 to 3, **characterized in that** the opening (18) is formed into a region of the wall of the intermediate product, said region extending at an angle of greater than 0°, preferably approximately at right angles, to a plane of the shell-like intermediate product, which plane defines the greatest extent of the shell-like intermediate product, such that the plug-type connection can be produced parallel to a top (27) or a bottom of the finished tank.

5. The method as claimed in claim 1, **characterized in that** the die (20) is initially closed, by way of a tool-side piston (21), during the laying-in and molding of the shell-like intermediate products, and **in that** the die (20) is opened by the piston (21), for the purposes of producing the opening, after the laying-in and molding.

6. The method as claimed in one of claims 1 to 5, **characterized by** the use of a blow-molding tool (1) having in each case two blow mold halves (3) which have in each case at least one recess (5), having at least one sealing frame (9) and/or one joining frame (10) which is movable transversely with respect to an opening and closing movement of the blow mold halves (3) and which can be placed between the blow mold halves (3), wherein the method comprises firstly the extrusion or provision of the parisons (7), with the parisons (7) being arranged, during the former step or subsequently, between the open blow mold halves (3), the blow mold halves (3) are closed against the sealing frame (9), the parisons (7) are subsequently molded, using differential pressure, to form shell-like intermediate products, the opening (18) is subsequently punched out or cut out in a circular shape, the blow mold halves (3) are then opened, and at least one first attachment element is welded to the wall of an intermediate product, and finally the blow mold halves (3) are closed directly against one another for the purposes of joining the shell-like intermediate products.

7. The method as claimed in claim 6, **characterized in that** the opening (18) is produced by way of the punching or cutting tool arranged in the sealing frame (9).

8. A fuel tank produced in accordance with the method as claimed in one of claims 1 to 7, **characterized by** at least one line leadthrough through a tank wall (33), comprising a plug-type connection which is arranged within a shell surface or contour of the tank as defined by the tank wall (33), wherein the plug-type connection comprises a first attachment element and a second attachment element (25), and the first attachment element is welded to the tank and the second attachment element (25) is connected to the first attachment element, and wherein the first attachment element is arranged entirely in the interior of the tank, specifically in such a way that the plug-type connection of the line leadthrough is substantially integrated into the tank contour or envelope of the tank.

9. The fuel tank as claimed in claim 7 or 8, **characterized in that** the first attachment element is in the form of a socket end of the plug-type connection.

10. The fuel tank as claimed in either of claims 8 or 9, **characterized in that** the first attachment element has a pot-shaped housing (29) which is open at an end side and in which there is arranged an integrally formed attachment pin (32), preferably in the form of a double nipple.

## Revendications

1. Procédé de fabrication d'un récipient en matière synthétique thermoplastique, comportant les étapes de procédé suivantes :
- extrusion ou fourniture d'une ébauche tubulaire (7) à partir de matière synthétique thermoplastique plastifiée et division ainsi que déploiement de l'ébauche (7) en deux bandes d'extrudat planes ou
- extrusion ou fourniture de deux ébauches (7) en forme de bandes,
- application et moulage des ébauches (7) dans des cavités (5) d'un outil de moulage par soufflage (1) en plusieurs parties (5) en utilisant une pression différentielle, dans lequel les cavités (5) de l'outil de moulage par soufflage (1) délimitent une empreinte de moule,
- poinçonnage ou découpage suivant une forme circulaire d'au moins une ouverture (18) dans au moins un produit intermédiaire en forme de coque, dans lequel
- l'ouverture est produite au moyen d'un outil de poinçonnage ou de coupe qui pénètre une paroi de l'un des produits intermédiaires en forme de coques , dans lequel, dans une deuxième étape de procédé, un premier élément de raccordement d'une liaison de conduite ou d'un ensemble de conduites est soudé, côté empreinte de moule, à la paroi du produit intermédiaire en forme de coque, de telle sorte qu'un rebord de soudage périphérique (23) du premier élément de raccordement entoure de manière étanche l'ouverture (18), et dans lequel l'élément de raccordement ne pénètre pas ou ne traverse pas la paroi du produit intermédiaire et ne fait pas non plus saillie vers l'extérieur,
- assemblage des produits intermédiaires en forme de coques pour former un récipient et retrait du récipient de l'outil de moulage par soufflage (1) ainsi que
- liaison d'un deuxième élément de raccordement (25), qui est complémentaire au premier élément de raccordement au sens d'une liaison enfichable, au premier élément de raccordement, dans lequel
la liaison enfichable est produite à l'intérieur du contour du récipient défini par la paroi de récipient,
**caractérisé en ce que**
le poinçonnage de l'ouverture (18) est effectué à l'aide d'un outil de poinçonnage côté empreinte de moule, lequel outil est poussé à travers la paroi du produit intermédiaire en forme de coque dans une matrice (20) côté outil.

2. Procédé selon la revendication 1, **caractérisé en ce que** le premier élément de raccordement comprend une extrémité femelle et **en ce que** le deuxième élément de raccordement comprend une extrémité mâle, l'extrémité mâle étant enfichée depuis l'extérieur dans l'extrémité femelle.

3. Procédé selon la revendication 1, **caractérisé en ce que** le premier élément de raccordement comprend un boîtier (29) en forme de pot et ouvert du côté frontal, doté d'au moins un tenon de raccordement (32) disposé dans celui-ci et accessible depuis le côté frontal ouvert, le boîtier étant soudé, par le côté frontal ouvert, du côté de l'empreinte de moule, sur la paroi du produit intermédiaire en forme de coque de manière à entourer l'ouverture (18).

4. Procédé selon l'une des revendications 1 à 3, **caractérisé en ce que** l'ouverture (18) est ménagée dans une région de la paroi du produit intermédiaire qui s'étend suivant un angle supérieur à 0°, de préférence approximativement à angle droit par rapport à un plan du produit intermédiaire en forme de coque, lequel plan définit la plus grande étendue du produit intermédiaire en forme de coque, de telle sorte que la liaison enfichable puisse être produite parallèlement à une partie supérieure (27) ou une partie inférieure du récipient fini.

5. Procédé selon la revendication 1, **caractérisé en ce que** la matrice (20) est tout d'abord fermée au moyen d'un piston (21) côté outil lors de l'application et du moulage des produits intermédiaires en forme de coques, et **en ce que** la matrice (20) est ouverte par le piston (21) après l'application et le moulage en vue de produire l'ouverture.

6. Procédé selon l'une des revendications 1 à 5, **caractérisé par** l'utilisation d'un outil de moulage par soufflage (1) comportant deux moitiés de moule de soufflage (3) comprenant respectivement au moins une cavité (5), au moins un cadre d'étanchéité (9) et/ou un cadre d'assemblage (10) qui est déplaçable transversalement à un déplacement d'ouverture et de fermeture des moitiés de moule de soufflage (3) et peut être placé entre les moitiés de moule de soufflage (3), le procédé comportant tout d'abord l'extrusion ou la fourniture des ébauches (7), les ébauches (7) étant disposées pendant ce temps ou ensuite entre les moitiés de moule de soufflage (3) ouvertes, les moitiés de moule de soufflage (3) étant fermées contre le cadre d'étanchéité (9), les ébauches (7) étant ensuite moulées en utilisant une pression différentielle pour former des produits intermédiaires en forme de coques, puis l'ouverture (18) étant poinçonnée ou découpée suivant une forme circulaire, puis les moitiés de moule de soufflage (3) étant ouvertes et au moins un premier élément de raccordement étant soudé sur la paroi d'un produit intermédiaire, et enfin les moitiés de moule de soufflage (3) étant fermées directement l'une contre l'autre en vue de l'assemblage des produits intermédiaires en forme de coques.

7. Procédé selon la revendication 6, **caractérisé en ce que** l'ouverture (18) est produite au moyen de l'outil de poinçonnage ou de coupe disposé dans le cadre d'étanchéité (9).

8. Récipient de carburant fabriqué selon le procédé selon l'une des revendications 1 à 7, **caractérisé par** au moins un passage de conduite à travers une paroi de récipient (33) comportant une liaison enfichable qui est disposée à l'intérieur d'une surface d'enveloppe ou d'un contour du récipient défini(e) par la paroi de récipient (33), la liaison enfichable comportant un premier élément de raccordement et un deuxième élément de raccordement (25) et le premier élément de raccordement étant soudé sur le récipient et le deuxième élément de raccordement (25) étant relié au premier élément de raccordement, et le premier élément de raccordement étant disposé complètement à l'intérieur du récipient, et ce de telle sorte que la liaison enfichable du passage de conduite s'insère sensiblement dans le contour de récipient ou la courbe enveloppante du récipient.

9. Récipient de carburant selon la revendication 7 ou 8, **caractérisé en ce que** le premier élément de raccordement est réalisé sous forme d'extrémité femelle de la liaison enfichable.

10. Récipient de carburant selon la revendication 8 ou 9, **caractérisé en ce que** le premier élément de raccordement comprend un boîtier (29) en forme de pot ouvert du côté frontal, boîtier dans lequel est disposé un tenon de raccordement (32) formé d'un seul tenant, de préférence sous la forme d'un mamelon double.
